# EUROPÄISCHE PATENTSCHRIFT

(11) **EP 1 768 887 B1**
(45) Veröffentlichungstag und Bekanntmachung des Hinweises auf die Patenterteilung: **07.04.2010**
(21) Anmeldenummer: 05760045.4
(22) Anmeldetag: 13.06.2005
(51) Int. Cl.: B62D 1/06, B62D 7/22

(54) **SCHWINGUNGSGEDÄMPFTES FAHRZEUGLENKRAD**
VIBRATION-CUSHIONED VEHICLE STEERING WHEEL
VOLANT DE VEHICULE A AMORTISSEMENT DES VIBRATIONS

(30) Priorität: 15.06.2004 DE 202004009692 U; 17.03.2005 DE 202005004649 U
(43) Veröffentlichungstag der Anmeldung: 04.04.2007
(73) Patentinhaber: Takata-Petri AG, 63743 Aschaffenburg (DE)
(72) Erfinder: THOMAS, Michael, 63785 Obernburg (DE)
(74) Vertreter: Baumgärtel, Gunnar
(86) Internationale Anmeldenummer: PCT/DE2005/001088
(87) Internationale Veröffentlichungsnummer: WO 2005/123482

(56) Entgegenhaltungen:
- EP-A- 1 190 933
- DE-A1- 3 927 383
- GB-A- 433 531
- SU-A1- 1 500 541
- US-A1- 2004 050 203
- PATENT ABSTRACTS OF JAPAN Bd. 2002, Nr. 09, 4. September 2002 (2002-09-04) & JP 2002 154439 A (NOK VIBRACOUSTIC KK), 28. Mai 2002 (2002-05-28)
- PATENT ABSTRACTS OF JAPAN Bd. 011, Nr. 067 (M-566), 28. Februar 1987 (1987-02-28) & JP 61 222868 A (NISSAN MOTOR CO LTD), 3. Oktober 1986 (1986-10-03)

## Beschreibung

Die Erfindung betrifft ein schwingungsgedämpftes Fahrzeuglenkrad nach dem Oberbegriff des Anspruchs 1.

Lenkraddrehschwingungen, die zumeist vom Fahrwerk ausgelöst werden, führen zu unangenehmen Vibrationen für den Fahrer. Es ist bekannt, Lenkraddrehschwingungen durch ein starres Zusatzgewicht am Lenkrad zu dämpfen. Das Mehrgewicht wirkt sich jedoch nachteilig auf andere Schwingungszustände des Lenkrades aus.

Weiterhin ist aus der DE 200 16 639 U1 ein Lenkrad bekannt, bei dem zwischen dem Lenkradskelett und der Lenkradkranzhülle ein schwingungsdämpfendes Element angeordnet ist. Vorzugsweise sind das Ringe oder eine durchgehende Einlage aus einem schwingungsdämpfenden Material oder Verbundmaterial, die auf dem Lenkradkranzskelett angeordnet sind und die Lenkradkranzhülle stützen.

Aus der EP 1 180 464 A2 ist ein Lenkrad bekannt, bei dem innerhalb des Lenkradkranzes ein Behälter angeordnet ist, in dem ein Gewicht in Form eines festen Körpers angeordnet ist, der sich in gewissen Grenzen in dem Behälter bewegen kann und der auf diese Weise Vibrationen des Lenkrades entgegenwirkt.

Weiterhin ist aus der DE 39 27 383 A1 eine Skelettkonstruktion für Lenkräder bekannt, bei dem der Lenkradkranz teilweise mit einem fluiden Medium gefüllt ist. Dadurch soll das Massenträgheitsmoment des Lenkrades verringert werden. Die Lenkradrückschwingung soll gedämpft werden und ein Überschwingen soll vermieden werden. Eine weitere dämpfende Wirkung soll durch die Reibung zwischen dem fluiden Medium und der Innenwandung des Lenkradkranzes erzielt werden.

Der Nachteil dieser Anordnungen besteht darin, daß sich der feste Körper bzw. die Flüssigkeit im Lenkradkranz abgesehen von der Reibung an der Behälterwand bzw. an der Wand der Skelettkonstruktion ungedämpft bewegen können, wodurch die Schwingungsdämpfung beeinträchtigt wird.

Der Erfindung liegt die Aufgabe zugrunde, die Schwingungsdämpfung am Lenkrad weiter zu verbessern.

Erfindungsgemäß wird das gemäß den Merkmalen des Anspruchs 1 erreicht.

Bei einem schwingungsgedämpften Fahrzeuglenkrad mit einem Lenkradskelett und einer Lenkradhülle sowie mit mindestens einem innerhalb des Lenkrades angeordneten Behälter, in dem mindestens ein beweglicher Körper als Schwingungsdämpfer angeordnet ist, sind erfindungsgemäß zwischen mindestens einer Stirnseite des in Richtung seiner Längsachse beweglichen Körpers und der zugeordneten Behälterstirnseite Mittel zur Schwingungstilgung vorgesehen.

Bei der erfindungsgemäßen Anordnung kann sich ein beweglicher Körper nicht ungehindert in Richtung seiner Längsachse zwischen den Stirnseiten des Behälters bewegen, sondern seine Bewegung wird durch Mittel zur Schwingungstilgung abgebremst, d.h. der Körper führt eine gedämpfte Schwingung aus.

Als Mittel zur Schwingungstilgung ist in einer Ausführungsform eine Flüssigkeit vorgesehen. Die Art der Dämpfung lässt sich über das Gewicht des beweglichen Körpers und über den Anteil der Flüssigkeit einstellen. In einer Ausführungsform ist der Behälter vollständig mit Flüssigkeit gefüllt. Die Flüssigkeit kann aus einer Komponente, z.B. Wasser, Öl oder Glyzerin bestehen. Sie kann aber auch zur Einstellung einer gewünschten Schwingungstilgung aus mehreren Komponenten zusammengesetzt sein.

Zur zusätzlichen Dämpfung der Flüssigkeiten kann mindestens eine Verengung im Behälter vorgesehen sein. In einer Ausführungsform sind mehrere unterschiedlich große Verengungen vorgesehen.

In einer weiteren Ausführungsform ist als Mittel zur Schwingungstilgung mindestens ein Federelement vorgesehen. Die federelemente können z.B. aus Metall, Gummi oder Kunststoff bestehen. Eine weitere Ausführungsform weist sowohl mindestens ein Federelement als auch eine Flüssigkeit auf. Auf diese Weise kann die Schwingungsdämpfung in weiten Grenzen eingestellt werden.

Als Mittel zur Schwingungstilgung kann auch ein komprimierbares Medium, wie z.B. Gas, vorgesehen sein.

In einer weiteren Ausgestaltung der Erfindung sind mehrere Behälter unterschiedlicher Größe vorgesehen Dadurch kann eine größere Bandbreite der Dämpfung erreicht werden. Diese Bandbreite kann noch dadurch erweitert werden, daß in mindestens einem Behälter mehrere bewegliche Körper unterschiedlicher Masse vorgesehen sind, zwischen denen Federelemente angeordnet sind, wobei es zweckmäßig sein kann, bei Anordnung mehrerer Behälter in jedem Behälter bewegliche Körper unterschiedlicher Masse vorzusehen. Auch bei dieser Ausführungsform kann zusätzlich in jedem Behälter eine Flüssigkeit enthalten sein.

Bei Verwendung eines Behälters ist es zweckmäßig, diesen in dem bei Geradeausfahrt unteren Teil des Lenkrades anzuordnen.

Bei Verwendung von zwei Behältern ist es zweckmäßig, diese gegenüber anzuordnen, um eine Unwucht zu vermeiden.

Die Behälter sind insbesondere im Lenkradkranz angeordnet, wobei sie vorzugsweise ohne direkte Verbindung zum Lenkradskelett in der Schaumstoffumhüllung des Lenkrades vorgesehen sind, d.h. die Behälter sind allseitig von Schaumstoff umgeben, liegen also nicht am Lenkradskelett an.

Der Behälter kann z.B. mindestens teilweise innerhalb eines U-förmigen Lenkradskeletts angeordnet sein. Weiterhin kann der Behälter unterschiedliche Querschnitte haben. So kann er einen kreisförmigen oder einen der Trapezform ähnlichen Querschnitt aufweisen. Der bewegliche Körper kann zur Erzielung einer ruckfreien Bewegung an seinem Umfang gelagert sein. Vorzugsweise ist er zumindest annähernd punktförmig gelagert, wobei die Lagerstellen insbesondere gewölbte Lagerflächen aufweisen.

Es kann zweckmäßig sein, im Behälter für den Schwingungsdämpfer Unterdruck vorzusehen.

Die Erfindung soll in Ausführungsbeispielen anhand von Zeichnungen erläutert werden.

Es zeigen:
- Fig. 1: einen Längsschnitt durch einen Abschnitt eines Lenkrades mit einem in einem Behälter mit Flüssigkeit angeordneten beweglichen Körper;
- Fig. 2: einen Längsschnitt durch einen Abschnitt eines Lenkrades mit einem in einem Behälter zwischen Federn angeordneten beweglichen Körper;
- Fig. 3: einen Querschnitt durch den Lenkradabschnitt entlang der Schnittlinie III-III der Fig.2;
- Fig. 4: einen Längsschnitt durch einen Abschnitt eines Lenkrades mit mehreren in einem Behälter angeordneten beweglichen Körpern;
- Fig. 5: einen Längsschnitt durch einen Abschnitt eines Lenkrades mit mehreren Behältern.
- Fig. 6: den Schnitt nach Fig. 1 mit Behälterverengungen;
- Fig. 7: einen Querschnitt durch den Lenkradkranz entlang der Schnittlinie III - III der Fig.2 mit einem gegenüber der Fig. 3 veränderten Behälterquerschnitt.

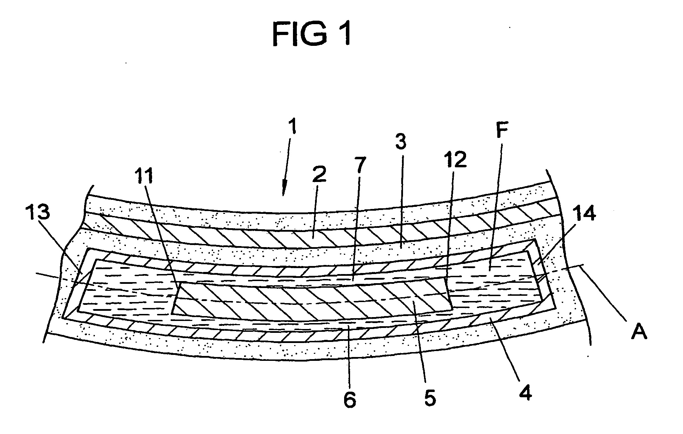

Bei der Ausführungsform der Fig. 1 ist ein Abschnitt eines Lenkradkranzes 1 im Schnitt dargestellt. Es ist ein Abschnitt eines Lenkradkranzskeletts 2 und einer Lenkradumhüllung 3 erkennbar. In der Lenkradumhüllung 3 ist ein Behälter 4 vorgesehen, der vorzugsweise in dem bei Geradeausfahrt unteren Teil des Lenkrades 1 angeordnet ist, und entsprechend der Krümmung des Lenkradkranzes 1 gekrümmt ist. Die Anordnung des Behälters 4 im unteren Teil des Lenkrades 1 ist dann zweckmäßig, wenn nur ein Behälter vorgesehen ist. Bei Verwendung von zwei Behältern ist es zweckmäßig, diese gegenüber anzuordnen, d.h., in dem bei Geradeausfahrt unteren Teil und oberen Teil des Lenkrades. Der Behälter 4 wird beim Schäumen der Lenkradumhüllung 3 mit eingeschäumt oder wird nach dem Schäumen in eine Öffnung der Lenkradumhüllung eingesetzt. In dem Behälter 4 ist ein beweglicher Körper 5 angeordnet, der die Querschnittsform des Behälters aufweist, z.B. die Kreisform, der aber zur Gewährleistung der Beweglichkeit einen geringeren Durchmesser als der Innendurchmesser des Behälters 4 aufweist. Weiterhin ist der bewegliche Körper und auch dessen Längsachse A ebenfalls entsprechend der Krümmung des Behälters 4 gekrümmt. Der Behälter 4 ist vollständig mit einer Flüssigkeit F, z.B.. mit Wasser, gefüllt, so dass der bewegliche Körper 5 allseitig von der Flüssigkeit umgeben ist, wobei der untere Abschnitt 6 des Spaltes zwischen dem beweglichen Körper 5 und der Innenwand des Behälters 4 wegen der auf den beweglichen Körper 5 einwirkenden Schwerkraft geringer ist als der obere Abschnitt 7 des Spaltes zwischen dem beweglichen Körper 5 und der Innenwand des Behälters 4.

Bei auftretenden Schwingungen am Lenkrad kann sich der bewegliche Körper 5 in Richtung seiner Längsachse A bewegen. Infolge der den beweglichen Körper 5 umgebenden Flüssigkeit und insbesondere infolge der zwischen den Stirnflächen 11, 12 und den Behälterstirnseiten 13, 14 befindlichen Flüssigkeit wird dessen Bewegung aber gedämpft. Die Art der Dämpfung wird dabei über das Gewicht des beweglichen Körpers und über die Flüssigkeitsmenge, d.h., auch über die Länge des Behälters, sowie auch über den Spalt zwischen dem beweglichen Körper 5 und der Innenwand des Behälters 4 eingestellt. Wegen der verbesserten Dämpfungseigenschaften dieses Systems im Vergleich zu einem frei beweglichen Körper, kann ein kleinerer beweglicher Körper gewählt werden, so dass die Gewichtserhöhung durch den beweglichen Körper reduziert wird.

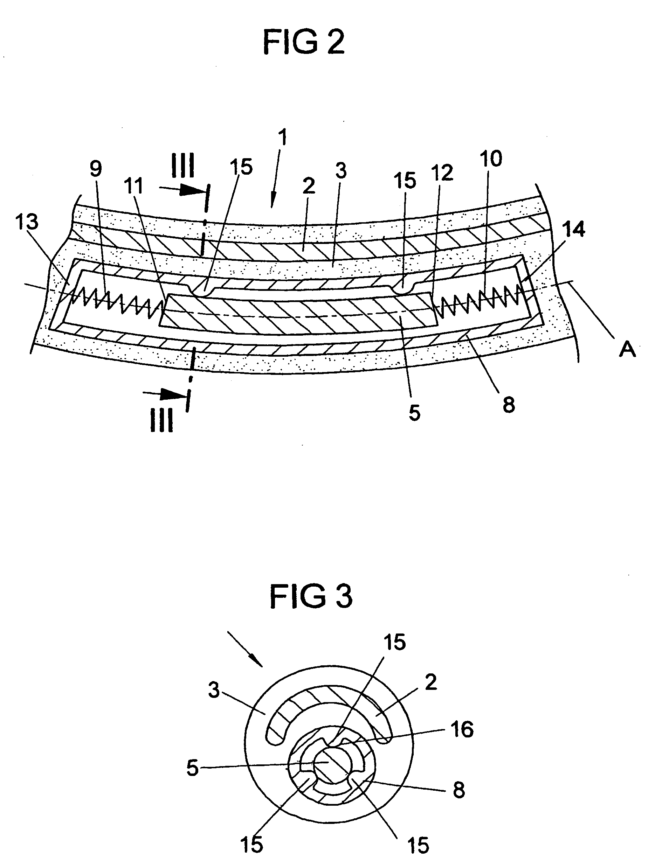

Bei der Ausführungsform der Figuren 2 und 3 ist in der Lenkradumhüllung 3 ein Behälter 8 vorgesehen, in dem der bewegliche Körper 5 zwischen zwei Federn 9, 10 angeordnet ist, die sich zwischen den Stirnflächen 11, 12 und den zugeordneten Behälterstirnseiten 13, 14 erstrecken. Auch bei dieser Ausführungsform ist der bewegliche Körper 5 entsprechend der Krümmung des Behälters 8 und des Lenkradkranzes 1 gekrümmt. Der bewegliche Körper 5 ist bei dieser Ausführungsform an Lagerstellen 15, die gewölbte Auflageflächen 16 aufweisen, nahezu punktförmig gelagert, so dass nur geringe Reibungskräfte wirken und der bewegliche Körper 5 deshalb in Richtung seiner Längsachse A leicht beweglich ist. Die Federn 9, 10 dämpfen aber die Bewegung des beweglichen Körpers 5 in Richtung seiner Längsachse A in ähnlicher Weise wie die Flüssigkeit in der Ausführungsform der Fig. 1. Bei dieser Ausführungsform wird die Schwingungsfrequenz des beweglichen Körpers 5 über die Federstärke und die Masse des beweglichen Körpers eingestellt.

Aus der Fig. 3 ist ersichtlich, dass der Behälter 5 bei dieser Ausführungsform zum Teil innerhalb des U-förmigen Lenkradkranzskeletts 2 liegt und dass in der dargestellten Schnittebene drei Lagerstellen 15 im Winkelabstand von 120° vorgesehen sind. Auch in dem in der Fig. 2 rechts durch die Lagerstelle 15 dargestellten Lagerbereich sind drei Lagerstellen vorgesehen.

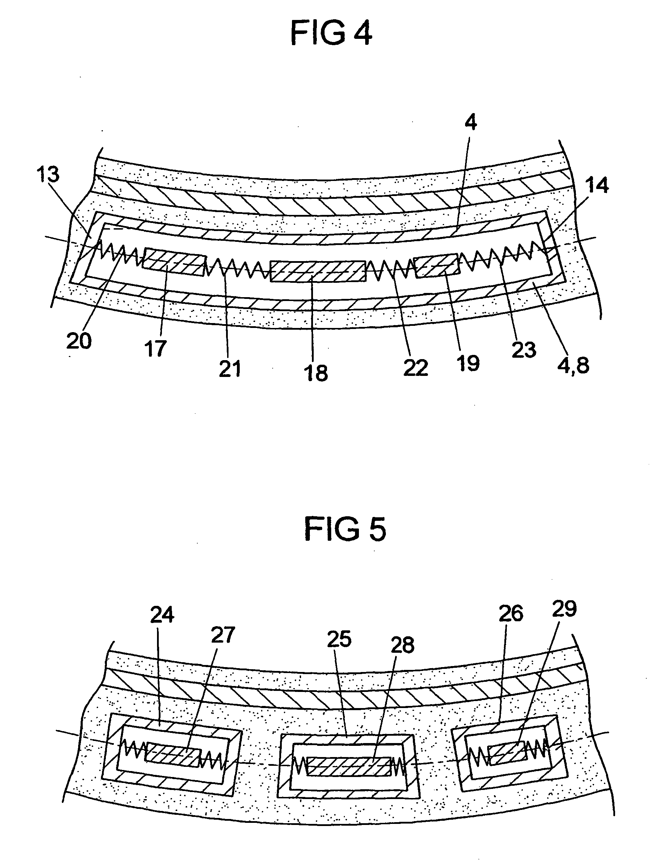

Bei der Ausführungsform der Fig. 4 sind in einem Behälter, der die Form des Behälters 4 oder des Behälters 8 aufweisen kann, drei bewegliche Körper 17, 18, 19 vorgesehen. In der Ausführungsform des Behälters 4 sind diese von Flüssigkeit umgeben. In der Ausführungsform des Behälters 8 sind diese an ihrem Umfang wie der bewegliche Körper 5 der Figuren 2 und 3 punktförmig gelagert sind. Diese Lagerung ist in der Fig. 4 nicht dargestellt. Es ist aber auch möglich, dass der Behälter 8 zusätzlich mit einer Flüssigkeit wie bei der Ausführungsform der Fig. 1 gefüllt ist. Die beweglichen Körper 17, 18, 19 haben unterschiedliche Größe und Masse. Zwischen der Behälterstirnseite 13 und dem beweglichen Körper 17 ist eine Feder 20 angeordnet. Zwischen den beweglichen Körpern 17, 18 bzw. 18, 19 ist je eine Feder 21. bzw. 22 vorgesehen. Weiterhin ist erkennbar, dass zwischen der Behälterstirnseite 14 und dem beweglichen Körper 19 eine Feder 23 angeordnet ist.

Bei dieser Ausführungsform der Fig. 4 kann eine größere Bandbreite der Dämpfung erzielt werden als bei den Ausführungsformen der Figuren 1 bis 3, da sowohl die beweglichen Körper unterschiedliche Größe und Masse aufweisen können, als auch Federn mit unterschiedlicher Federkonstante verwendet werden können.

Bei der Ausführungsform der Fig. 5 sind mehrere Behälter 24, 25, 26 vorgesehen, in denen jeweils ein beweglicher Körper 27, 28, 29 angeordnet ist. Diese können wie die Ausführungsformen der Figuren 2 - 4 punktförmig gelagert sein und/oder in einer Flüssigkeit angeordnet sein. Zwischen jedem beweglichen Körper und den zugeordneten Stirnflächen der Behälter sind Federn vorgesehen, die in der Fig. 5 schematisch dargestellt aber nicht näher gekennzeichnet sind, da ihre Anordnung der in der Fig. 2 dargestellten entspricht.

Bei der Anordnung der Fig. 5 kann eine noch größere Bandbreite der Dämpfung als bei der Ausführungsform der Fig. 4 erzielt werden, da neben beweglichen Körpern unterschiedlicher Masse und Federn unterschiedlicher Federkonstante auch Flüssigkeiten unterschiedlicher Viskosität verwendet werden können, wie z.B. Wasser, Öl, Glyzerin oder ein Gemisch aus diesen Flüssigkeiten.

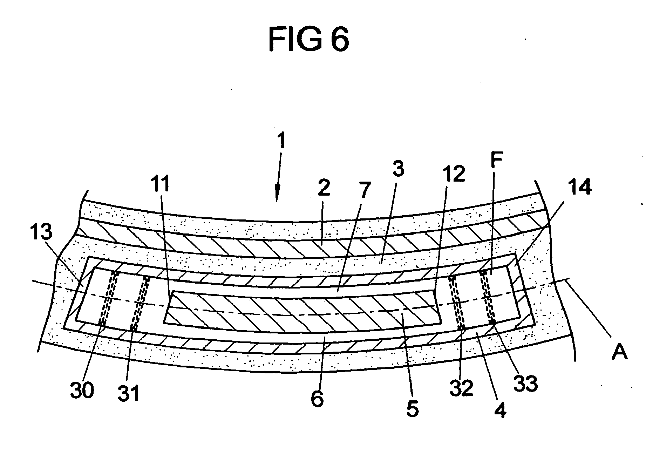

Bei der Ausführungsform der Fig. 6 sind zur weiteren Verbesserung der Dämpfung Verengungen 30 bis 33 vorgesehen, die sich von der Behälterinnenwand ringförmig in den Behälter 4 hinein erstrecken. In der dargestellten Ausführungsform sind die Verengungen 30 und 33 größer als die Verengungen 31 und 32.

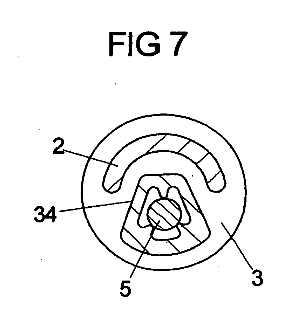

Bei der Ausführungsform der Fig. 7 weist der Behälter 34 einen der Trapezform angenäherten Querschnitt auf. Weiterhin ist erkennbar, dass der Behälter 34 teilweise innerhalb des U-förmigen Lenkradkranzskeletts 2 angeordnet ist.

## Patentansprüche

1. Schwingungsgedämpftes Fahrzeuglenkrad mit einem Lenkradskelett und einer Lenkradhülle sowie mit mindestens einem innerhalb des Lenkrades angeordneten Behälter, in dem mindestens ein beweglicher Körper als Schwingungsdämpfer angeordnet ist,
**dadurch gekennzeichnet,**
**dass** zwischen mindestens einer Stirnseite (11, 12) des in Richtung seiner Längsachse (A) beweglichen Körpers (5, 17, 19, 27, 28, 29) und der zugeordneten Behälterstirnseite (13, 14) Mittel (F, 9, 10, 20, 23) zur Schwingungstilgung vorgesehen sind.

2. Fahrzeuglenkrad nach Anspruch 1, **dadurch gekennzeichnet, dass** als Mittel zur Schwingungstilgung eine Flüssigkeit (F) vorgesehen ist.

3. Fahrzeuglenkrad nach Anspruch 2, **dadurch gekennzeichnet, dass** der Behälter (4) vollständig mit Flüssigkeit (F) gefüllt ist.

4. Fahrzeuglenkrad nach Anspruch 2 oder 3, **dadurch gekennzeichnet, dass** die Flüssigkeit (F) aus mehreren Komponenten besteht.

5. Fahrzeuglenkrad nach mindestens einem der Ansprüche 2 bis 4, **dadurch gekennzeichnet, dass** zur zusätzlichen Dämpfung der Flüssigkeiten mindestens eine Verengung im Behälter vorgesehen ist.

6. Fahrzeuglenkrad nach Anspruch 5, **dadurch gekennzeichnet, dass** mehrere unterschiedlich große Verengungen vorgesehen sind.

7. Fahrzeuglenkrad nach mindestens einem der vorhergehenden Ansprüche, **dadurch gekennzeichnet, dass** als Mittel zur Schwingungstilgung mindestens sein Federelement (9, 10, 20, 21, 22 23) vorgesehen ist.

8. Fahrzeuglenkrad nach Anspruch 7, **dadurch gekennzeichnet, dass** die Federelemente (9, 10, 20, 21, 22, 23) aus Metall, Gummi oder Kunststoff bestehen.

9. Fahrzeuglenkrad nach mindestens einem der vorhergehenden Ansprüche, **dadurch gekennzeichnet, dass** als Mittel zur Schwingungstilgung ein komprimierbares Medium vorgesehen ist.

10. Fahrzeuglenkrad nach Anspruch 9, **dadurch gekennzeichnet, dass** als komprimierbares Medium Gas vorgesehen ist.

11. Fahrzeuglenkrad nach mindestens einem der vorhergehenden Ansprüche, **dadurch gekennzeichnet, dass** bei Verwendung von einem Behälter, dieser in dem bei Geradeausfahrt unteren Teil des Lenkrades angeordnet ist.

12. Fahrzeuglenkrad nach mindestens einem der vorhergehenden Ansprüche 1 bis 10, **dadurch gekennzeichnet, dass** bei Verwendung von zwei Behältern diese gegenüber angeordnet sind.

13. Fahrzeuglenkrad nach mindestens einem der vorhergehenden Ansprüche 1 bis 10 und 12, **dadurch gekennzeichnet, dass** mehrere Behälter (24, 25, 26) unterschiedlicher Größe vorgesehen sind.

14. Fahrzeuglenkrad nach mindestens einem der vorhergehenden Ansprüche, **dadurch gekennzeichnet, dass** in mindestens einem Behälter (4) mehrere bewegliche Körper (17, 18, 19) unterschiedlicher Masse vorgesehen sind, zwischen denen Federelemente (21, 22) angeordnet sind..

15. Fahrzeuglenkrad nach mindestens einem der vorhergehenden Ansprüche, **dadurch gekennzeichnet, dass** bei Anordnung mehrerer Behälter (24, 25, 26) in jedem Behälter (24, 25, 26) bewegliche Körper (27, 28, 29) unterschiedlicher Masse vorgesehen sind.

16. Fahrzeuglenkrad nach mindestens einem der vorhergehenden Ansprüche, **dadurch gekennzeichnet, dass** der mindestens eine Behälter (4, 8, 24, 25, 26) im Lenkradkranz (1) angeordnet ist.

17. Fahrzeuglenkrad nach Anspruch 16, **dadurch gekennzeichnet, dass** der Behälter ohne direkte Verbindung zum Lenkradskelett (2) angeordnet ist.

18. Fahrzeuglenkrad nach Anspruch 16 oder 17, **dadurch gekennzeichnet, dass** der Behälter in der Schaumstoffumhüllung (3) des Lenkrades angeordnet ist.

19. Fahrzeuglenkrad nach mindestens einem der Ansprüche 16 bis 18, **dadurch gekennzeichnet, dass** der Behälter mindestens teilweise innerhalb eines U-förmigen Lenkradskeletts angeordnet ist.

20. Fahrzeuglenkrad nach mindestens einem der Ansprüche 16 bis 19, **dadurch gekennzeichnet, dass** der Behälter einen kreisförmigen Querschnitt aufweist.

21. Fahrzeuglenkrad nach mindestens einem der Ansprüche 16 bis 19, **dadurch gekennzeichnet, dass** der Behälter einen der Trapezform ähnlichen Querschnitt aufweist.

22. Fahrzeuglenkrad nach mindestens einem der vorhergehenden Ansprüche, **dadurch gekennzeichnet, dass** der bewegliche Körper (5, 17, 18, 19, 27, 28, 29) an seinem Umfang gelagert ist.

23. Fahrzeuglenkrad nach Anspruch 22, **dadurch gekennzeichnet, dass** der bewegliche Körper (5, 17, 18, 19, 27, 28, 29) zumindest annähernd punktförmig gelagert ist.

24. Fahrzeuglenkrad nach Anspruch 22 oder 23, **dadurch gekennzeichnet, dass** die Lagerstellen (15) gewölbte Auflageflächen (16) aufweisen.

25. Fahrzeuglenkrad nach mindestens einem der vorhergehenden Ansprüche, **dadurch gekennzeichnet, dass** im Behälter für den Schwingungsdämpfer Unterdruck vorgesehen ist.

## Claims

1. A vibration-damped vehicle steering wheel with a steering wheel carcass and a steering wheel covering, and with at least one container which is arranged within the steering wheel and in which at least one movable body is arranged as a vibration damper, **characterized in that** means (F, 9, 10, 20, 23) for eliminating vibration are provided between at least one end side (11, 12) of the body (5, 17, 19, 27, 28, 29), which is movable in the direction of its longitudinal axis (A), and the assigned container end side (13, 14).

2. The vehicle steering wheel as claimed in claim 1, **characterized in that** a liquid (F) is provided as the means for eliminating vibration.

3. The vehicle steering wheel as claimed in claim 2, **characterized in that** the container (4) is completely filled with liquid (F).

4. The vehicle steering wheel as claimed in claim 2 or 3, **characterized in that** the liquid (F) is composed of a plurality of components.

5. The vehicle steering wheel as claimed in at least one of claims 2 to 4, **characterized in that**, for the additional damping of the liquids, at least one constriction is provided in the container.

6. The vehicle steering wheel as claimed in claim 5, **characterized in that** a plurality of differently sized constrictions are provided.

7. The vehicle steering wheel as claimed in at least one of the preceding claims, **characterized in that** at least one spring element (9, 10, 20, 21, 22, 23) is provided as the means for eliminating vibration.

8. The vehicle steering wheel as claimed in claim 7, **characterized in that** the spring elements (9, 10, 20, 21, 22, 23) are composed of metal, rubber or plastic.

9. The vehicle steering wheel as claimed in at least one of the preceding claims, **characterized in that** a compressible medium is provided as the means for eliminating vibration.

10. The vehicle steering wheel as claimed in claim 9, **characterized in that** gas is provided as the compressible medium.

11. The vehicle steering wheel as claimed in at least one of the preceding claims, **characterized in that**, when a container is used, it is arranged **in that** part of the steering wheel which is at the bottom during straight-ahead travel.

12. The vehicle steering wheel as claimed in at least one of the preceding claims 1 to 10, **characterized in that**, when two containers are used, they are arranged opposite each other.

13. The vehicle steering wheel as claimed in at least one of the preceding claims 1 to 10 and 12, **characterized in that** a plurality of containers (24, 25, 26) of differing size are provided.

14. The vehicle steering wheel as claimed in at least one of the preceding claims, **characterized in that** a plurality of movable bodies (17, 18, 19) of differing mass, between which spring elements (21, 22) are arranged, are provided in at least one container (4).

15. The vehicle steering wheel as claimed in at least one of the preceding claims, **characterized in that**, when there is a plurality of containers (24, 25, 26), movable bodies (27, 28, 29) of differing mass are provided in each container (24, 25, 26).

16. The vehicle steering wheel as claimed in at least one of the preceding claims, **characterized in that** the at least one container (4, 8, 24, 25, 26) is arranged in the steering wheel rim (1).

17. The vehicle steering wheel as claimed in claim 16, **characterized in that** the container is arranged without direct connection to the steering wheel carcass (2).

18. The vehicle steering wheel as claimed in claim 16 or 17, **characterized in that** the container is arranged in the foam covering (3) of the steering wheel.

19. The vehicle steering wheel as claimed in at least one of claims 16 to 18, **characterized in that** the container is at least partially arranged within a U-shaped steering wheel carcass.

20. The vehicle steering wheel as claimed in at least one of claims 16 to 19, **characterized in that** the container has a circular cross section.

21. The vehicle steering wheel as claimed in at least one of claims 16 to 19, **characterized in that** the container has a cross section similar to the shape of a trapezoid.

22. The vehicle steering wheel as claimed in at least one of the preceding claims, **characterized in that** the movable body (5, 17, 18, 19, 27, 28, 29) is mounted on its circumference.

23. The vehicle steering wheel as claimed in claim 22, **characterized in that** the movable body (5, 17, 18, 19, 27, 28, 29) is mounted at least approximately in a pointlike manner.

24. The vehicle steering wheel as claimed in claim 22 or 23, **characterized in that** the bearing points (15) have curved bearing surfaces (16).

25. The vehicle steering wheel as claimed in at least one of the preceding claims, **characterized in that** negative pressure is provided in the container for the vibration damper.

## Revendications

1. Volant de véhicule à amortissement des vibrations comprenant une armature de volant et une enveloppe de volant et au moins un récipient agencé à l'intérieur du volant, dans lequel est agencé au moins un corps mobile à titre d'amortisseur de vibrations,
**caractérisé en ce qu'**entre au moins une face frontale (11, 12) du corps (5, 17, 19, 27, 28, 29) mobile en direction de son axe longitudinal (A) et le côté frontal associé (13, 14) du récipient sont prévus des moyens (F, 9, 10, 20, 23) pour amortir les vibrations.

2. Volant de véhicule selon la revendication 1, **caractérisé en ce qu'**il est prévu un liquide (F) à titre de moyens pour amortir les vibrations.

3. Volant de véhicule selon la revendication 2, **caractérisé en ce que** le récipient (4) est totalement rempli de liquide (F).

4. Volant de véhicule selon la revendication 2 ou 3, **caractérisé en ce que** le liquide (F) est constitué de plusieurs composants.

5. Volant de véhicule selon l'une au moins des revendications 2 à 4,
**caractérisé en ce que**, pour un amortissement supplémentaire des liquides il est prévu au moins un rétrécissement dans le récipient.

6. Volant de véhicule selon la revendication 5, **caractérisé en ce qu'**il est prévu plusieurs rétrécissements de tailles différentes.

7. Volant de véhicule selon l'une au moins des revendications précédentes, **caractérisé en ce qu'**il est prévu au moins un élément à ressort (9, 10, 20, 21, 22, 23) à titre de moyens pour amortir les vibrations.

8. Volant de véhicule selon la revendication 7, **caractérisé en ce que** les éléments à ressort (9, 10, 20, 21, 22, 23) sont en métal, en caoutchouc ou en matière plastique.

9. Volant de véhicule selon l'une au moins des revendications précédentes, **caractérisé en ce qu'**il est prévu un milieu compressible à titre de moyens pour amortir les vibrations.

10. Volant de véhicule selon la revendication 9, **caractérisé en ce qu'**il est prévu un gaz à titre de milieu compressible.

11. Volant de véhicule selon l'une au moins des revendications précédentes, **caractérisé en ce que** lors d'utilisation d'un récipient, celui-ci est agencé dans la partie inférieure du volant pendant une circulation en ligne droite.

12. Volant de véhicule selon l'une au moins des revendications précédentes 1 à 10, **caractérisé en ce que** lors de l'utilisation de deux récipients, ceux-ci sont agencés en opposition.

13. Volant de véhicule selon l'une au moins des revendications 1 à 10 et 12, **caractérisé en ce qu'**il est prévu plusieurs récipients (24, 25, 26) de tailles différentes.

14. Volant de véhicule selon l'une au moins des revendications précédentes, **caractérisé en ce qu'**il est prévu plusieurs corps mobiles (17, 18, 19) de masses différentes dans au moins un récipient (4), entre lesquels sont agencés des éléments à ressort (21, 22).

15. Volant de véhicule selon l'une au moins des revendications précédentes, **caractérisé en ce que** lors de l'agencement de plusieurs récipient (24, 25, 26), des corps mobiles (27, 28, 29) de masses différentes sont prévus dans chaque récipient (24, 25, 26).

16. Volant de véhicule selon l'une au moins des revendications précédentes, **caractérisé en ce que** ledit au moins un récipient (4, 8, 24, 25, 26) est agencé dans la couronne de volant (1).

17. Volant de véhicule selon la revendication 16, **caractérisé en ce que** le récipient est agencé sans liaison directe par rapport à l'armature de volant (2).

18. Volant de véhicule selon la revendication 16 ou 17, **caractérisé en ce que** le récipient est agencé dans l'enveloppe en mousse de l'armature de volant (2).

19. Volant de véhicule selon l'une au moins des revendications 16 à 18,
**caractérisé en ce que** le récipient est agencé au moins partiellement à l'intérieur d'une armature de volant en forme de U.

20. Volant de véhicule selon l'une au moins des revendications 16 à 19,
**caractérisé en ce que** le récipient présente une section transversale de forme circulaire.

21. Volant de véhicule selon l'une au moins des revendications 16 à 19,
**caractérisé en ce que** le récipient présente une section transversale semblable à une forme trapézoïdale.

22. Volant de véhicule selon l'une au moins des revendications précédentes, **caractérisé en ce que** le corps mobile (5, 17, 18, 19, 27, 28, 29) est monté au niveau de sa périphérie.

23. Volant de véhicule selon la revendication 22, **caractérisé en ce que** le corps mobile (5, 17, 18, 19, 27, 28, 29) est monté au moins approximativement de manière ponctuelle.

24. Volant de véhicule selon la revendication 22 ou 23, **caractérisé en ce que** les emplacements de montage (15) présentent des surfaces d'appui bombées (16).

25. Volant de véhicule selon l'une au moins des revendications précédentes, **caractérisé en ce qu'**il est prévu une dépression dans le récipient pour l'amortisseur de vibrations.
